**Europäisches Patentamt**

(19) **European Patent Office**

**Office européen des brevets**

(11) Veröffentlichungsnummer: **0 152 846**
**B1**

(12) # EUROPÄISCHE PATENTSCHRIFT

(45) Veröffentlichungstag der Patentschrift:
**18.05.88**

(51) Int. Cl.⁴: **B 01 D 21/00**, B 01 D 21/26

(21) Anmeldenummer: **85101069.2**

(22) Anmeldetag: **02.02.85**

(54) Einrichtung zur Behandlung von feuchten Stäuben und Schlämmen in der Stahlindustrie.

(30) Priorität: **22.02.84 DE 3406383**

(43) Veröffentlichungstag der Anmeldung:
**28.08.85 Patentblatt 85/35**

(45) Bekanntmachung des Hinweises auf die Patenterteilung:
**18.05.88 Patentblatt 88/20**

(84) Benannte Vertragsstaaten:
**AT BE DE FR GB IT LU NL SE**

(56) Entgegenhaltungen:
**CH-A-490 127**
**DE-A-1 517 904**
**DE-A-1 584 856**
**DE-A-2 710 359**
**DE-A-2 741 924**
**DE-B-1 141 598**
**DE-B-2 010 128**
**GB-A-478 977**
**GB-A-1 068 400**
**US-A-2 922 524**

(73) Patentinhaber: **Hoesch Aktiengesellschaft,
Eberhardstrasse 12, D-4600 Dortmund 1 (DE)**

(72) Erfinder: **Hotz, Rainer, Dipl.- Ing., Ottostrasse 105,
D-4712 Werne (DE)**
Erfinder: **Muszkiewicz, Herbert, Wegscheid 37,
D-4600 Dortmund 18 (DE)**

EP 0 152 846 B1

## Beschreibung

Die Erfindung betrifft eine Einrichtung zur Behandlung von Schlämmen aus Entstaubungsanlagen mit den im Oberbegriff des Anspruchs 1 angegebenen Merkmalen, die allgemein gebräuchlich ist. Die dabei zu entwässernde Suspension ist ungleichmäßig und mit Luft beladen, was für ein wirtschaftliches und einwandfreies Arbeiten des Zentrifugalabscheiders nachteilig ist.

In Hochofenanlagen fallen in der Gichtgasreinigung und in der Gießhallenentstaubung hocheisenhaltige Stäube an. Bei der Stahlerzeugung entstehen diese bei der Stahlerzeugung selbst und in den Umfüll- und Behandlungsstationen. Die Stäube werden üblicherweise in einer Primär- und Sekundärentstaubung erfaßt und abgeschieden. Bei den Entstaubungsanlagen kann es sich sowohl um Naß- als auch um Trockenabscheider handeln.

Bei der Naßentstaubung fällt eine Suspension mit geringem Feststoffanteil an, die üblicherweise für die Weiterbehandlung in Absetzbecken aufkonzentriert wird.

Der Staub hat ein sehr breites Kornspektrum. Schadstoffanreicherungen, wie z. B. Zink, Blei finden hauptsächlich am Feinkorn statt. Nur der Grobkornanteil ist weitgehend frei von Schadstoffen, so daß er im Verhüttungsprozeß wieder eingesetzt werden kann.

Es ist bekannt, daß die Trennung des Staubes in Grob- und Feinkorn in Zyklonabscheidern erfolgt.

Der zur Zeit nicht wieder verwendbare Feinkornanteil wird in Absetzbecken eingedickt und in bekannter Weise in Kammerfilterpressen, Vakuumtrommelfilter, Siebbandpressen, Rohrfilterpressen oder Membranfilterpressen entwässert. Zum Teil ist sogar für die Deponierung des Materials eine thermische Nachtrocknung z. B. im Drehrohrofen erforderlich.

Diese bekannten Verfahren und Einrichtungen sind sehr investitions- und betriebskostenintensiv und haben einen hohen Platzbedarf.

Von daher liegt der Erfindung die Aufgabe zugrunde, eine Einrichtung der eingangs genannten Art zu schaffen, die ein einwandfreies Entwässern der Schlämme mittels mindestens eines Zentrifugalabscheiders auch bei unterschiedlichen Betriebszuständen gewährleistet.

Diese Aufgabe wird gemäß der Erfindung mit den im Kennzeichen des Anspruchs 1 angegebenen Merkmalen gelöst.

Die Vorteile der Einrichtung nach der Erfindung sind insbesondere darin zu sehen, daß die in den Entstaubungsanlagen von Hochofenanlagen und Stahlwerken als Suspension anfallenden Schlämme einwandfrei auf einfache Weise bei geringem Platzbedarf, geringen Invenstitions- und Betriebskosten umweltfreundlich entwässert und auch fraktioniert werden können, wobei die dem Zentrifugalabscheider zugeführte Suspension auf einfache Weise homogenisiert und entgast werden kann.

Eine vorteilhafte Ausgestaltung ist im Anspruch 2 angegeben.

Anhand der Zeichnung wird ein Ausführungsbeispiel der Erfindung erläutert:
Es zeigen
Fig. 1 eine Gesamteinrichtung in schematischer Darstellung,
Fig. 2 einen Zentrifugalabscheider mit vorgeschaltetem Vorlagebehälter im Schnitt.

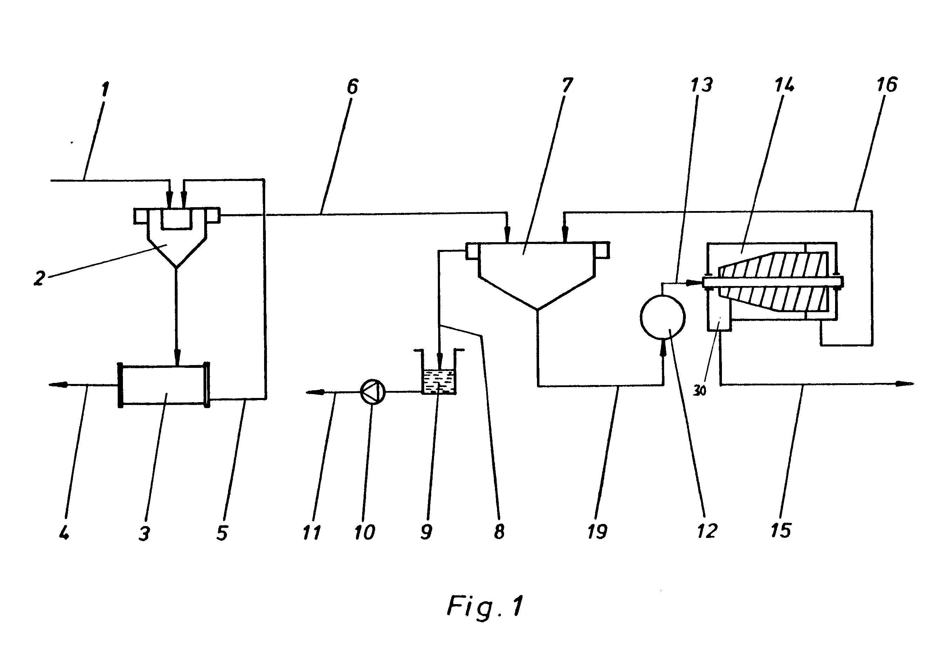

Wie die Fig. 1 zeigt, fließt die Suspension über den Zulauf 1 in einen Grobabscheider 2, in dem der Grobkornanteil abgeschieden und über eine Entwässerungstrommel 3 und Leitung 4 direkt dem Verhüttungsprozeß wieder zugeführt wird. Etwa in der Entwässerungstrommel 3 verbleibender Staub wird zunächst wieder über die Leitung 5 dem Grobabscheider 2 zugegeben.

Der im Grobabscheider 2 überlaufende Feinkornanteil, der z. Z. nicht wieder verwendbar ist, wird über die Leitung 6 einem Eindicker 7 zugeführt und eingedickt. Das geklärte Wasser wird über die Leitung 8, Pumpenvorlage 9 und Pumpe 10 über einen Rücklauf 11 wieder in den Wasserkreislauf gegeben.

Die im Eindicker 7 eingedickte Suspension wird mittels nicht dargestellter Luftheber (Monopumpen) in einen Vorlagebehälter 12 gepumpt, in dem die mit der Suspension eingebrachte Förderluft entfernt und die Inhaltsstoffe der Suspension durch Umwälzung homogenisiert werden. Ferner wird mit dem Vorlagebehälter 12 der Zulauf über die Verbindungsleitung 13 zu einem Zentrifugalabscheider 14 vergleichmäßigt. Mit dem Zentrifugalabscheider 14 wird die Suspension bis auf die für eine weitere Verarbeitung des Staubes notwendige Restfeuchte entwässert. Dieser Feinstaub 30 mit geringer Restfeuchte kann dann z. B. über geeignete Transportmittel 15 einer nicht dargestellten Feststoff-Deponie zugeführt werden. Das geklärte Wasser aus dem Zentrifugalabscheider 14 wird über eine Leitung 16 wieder dem Eindicker 7 zugeführt.

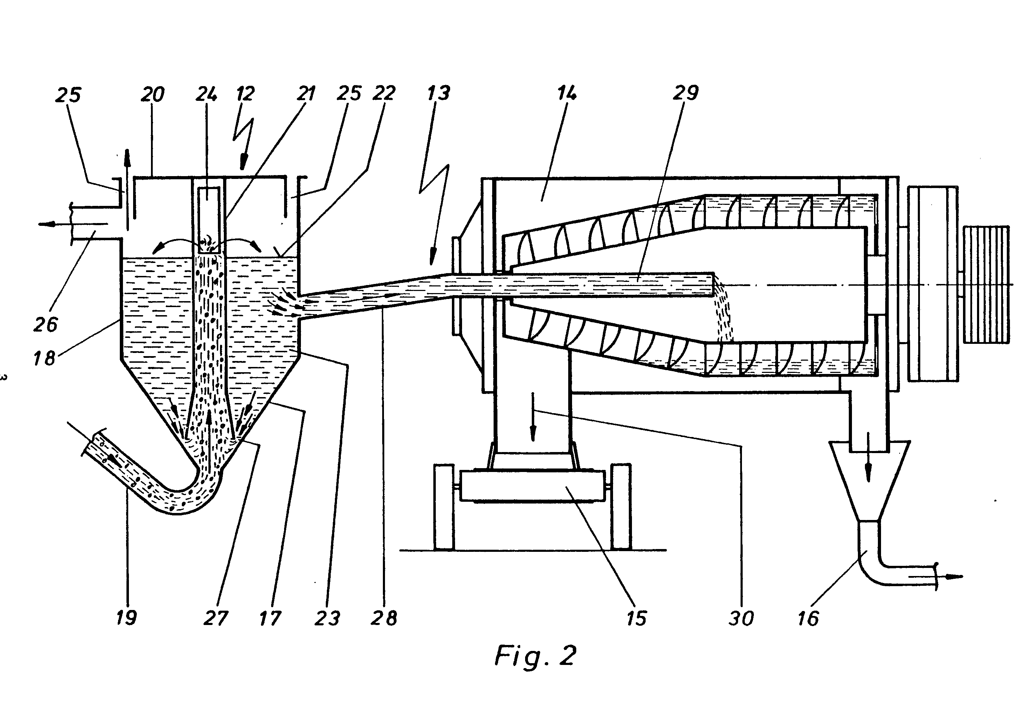

Die Fig. 2 zeigt den Zentrifugalabscheider 14 mit dem vorgeschalteten Vorlagebehälter 12, der aus einem unteren kegelförmigen Teil 17 und einem oberen zylindrischen Teil 18 besteht. Der Zulauf 19 zum Vorlagebehälter 12 ist am unteren Ende des kegelförmigen Teils 17 angeordnet. Am Deckel 20 ist zentral ein Steigrohr 21 aufgehängt, das bis in den unteren kegelförmigen Teil 17 des Vorlagebehälters 12 reicht.

Oberhalb des Flüssigkeitsspiegels 22 der Suspension 23 sind im Steigrohr 21 seitlich Austrittsöffnungen 24 und im Deckel 20 Deckelöffnungen 25 eingebracht. Außerdem weist der Vorlagebehälter 12 noch einen Überlauf 26 auf.

Die Wirkungsweise des Vorlagebehälters 12 ist derart, daß die mit Luft beladene Suspension 23 über den Zulauf 19 von unten in den kegelförmigen Teil 17 und in das am Deckel 20 zentral aufgehängte Steigrohr 21 strömt.

Aus den seitlich oberhalb des Flüssigkeitsspiegels 22 eingebrachten Austrittsöffnungen 24 tritt das Suspensions-Luft-Gemisch 23 aus. Dabei entweicht die Luft und strömt über die Deckelöffnungen 25 aus.

Das Einströmen des Suspensions-Luft-Gemisches 23 erzeugt im Ringspalt 27 zwischen dem kegelförmigem Teil 17 des Vorlagebehälters 12 und dem zentralen Steigrohr 21 eine Injektorwirkung. Dadurch wird die sich schon im Behälter befindliche Suspension 23 zum Teil mit in das Steigrohr 21 gerissen, erneut nach oben gebraucht, und somit umgewälzt und homogenisiert. Ein Absetzen des Feststoffes im Vorlagebehälter 12 wird dadurch ausgeschlossen. Die Verbindungsleitung 13 des Vorlagebehälters 12 zum Zentrifugalabscheider 14 befindet sich unterhalb des Flüssigkeitsspiegels 22.

Über ein Steigrohrteil 28 der Verbindungsleitung 13 wird dem höher gelegenen Zulaufteil 29 der Verbindungsleitung 13 dem Zentrifugalabscheider 14 die Suspension 23 zugeführt. Das dafür notwendige Druckgefälle wird durch die statische Höhe der Suspension 23 im Vorlagebehälter 12 zwischen Verbindungsleitung 13 und Flüssigkeitsspiegel 22 erzeugt. Dadurch, daß die Verbindungsleitung 13 unterhalb des Flüssigkeitsspiegels 22 liegt, ist gewährleistet, daß keine Luft mit der Suspension 23 in den Zentrifugalabscheider 14 gelangen kann.

Diese Ausführung des Vorlagebehälters 12 ist Voraussetzung für ein einwandfreies, kontinuierliches Arbeiten des Zentrifugalabscheiders 14. Mit der Suspension 23 eingebrachte Luft würde zu Kavitationserscheinungen im Zentrifugalabscheider 14 führen. Ungleichmäßiges Einbringen der Suspension 23 wirkt sich unmittelbar auf die Entwässerungsleistung und die Produktqualität aus. Außerdem entsteht dabei erhöhter Verschleiß im Zentrifugalabscheider 14.

Es ist selbstverständlich möglich, aber nicht dargestellt, für die Grobkornabscheidung auch einen Zentrifugalabscheider einzusetzen. In diesem ersten Zentrifugalabscheider wird dann das Grobkorn für den direkten Wiedereinsatz abgetrennt, entwässert und ausgetragen. Die zurückbleibende Suspension mit dem Feinkornanteil wird in dem nachgeschalteten beschriebenen Zentrifugalabscheider 14 weitgehend in Flüssigkeit und Feststoff getrennt. Die Flüssigkeit wird wieder in den Kreislauf eingespeist. Der Feststoff wird soweit entfeuchtet, daß ein problemloser Transport in offenen Behältern und eine einwandfreie Ablage auf einer Feststoffdeponie möglich ist. Hierbei kann dieselbe Deponietechnik (Entleerung der Behälter über die Kippkante) wie bei gleichrangigen Entwässerungsverfahren angewendet werden.

**Patentansprüche**

1. Einrichtung zur Behandlung von Schlämmen aus Entstaubungsanlagen in der Stahlindustrie mit einem Grobabscheider (2) zum Fraktionieren der Schlämme, einem Eindicker (7) und mindestens einem Zentrifugalabscheider (14) zum Entwässern der Schlämme, dadurch gekennzeichnet, daß jedem Zentrifugalabscheider (14) ein Vorlagebehälter (12) stromaufwärts zugeordnet ist, der im unteren Bereich einen kegelförmigen Teil (17) mit einem mittig angeordneten Zulauf (19) und ein an einem Deckel (20) zentral aufgehängtes Steigrohr (21) aufweist, das bis in den unteren kegelförmigen Teil (17) reicht und mit der Wandung des kegelförmigen Teils (17) einen Ringspalt (27) bildet, daß im oberen Teil des Steigrohres (21) Austrittsöffnungen (24) und im Deckel (20) Deckelöffnungen (25) vorgesehen sind und daß die Verbindungsleitung (13) zum Zentrifugalabscheider (14) oberhalb und in der Nähe des Kegelförmigen Teils (17) angeordnet ist.

2. Einrichtung nach Anspruch 1, dadurch gekennzeichnet, daß der oder die Zentrifugalabscheider (14) als Dekanter, Pendelzentrifugen oder dergleichen ausgebildet sind.

**Claims**

1. Apparatus for the treatment of muds from dust extraction systems in the steel industry, comprising a coarse precipitator (2) for fractionating the muds, a thickener (7) and at least one centrifugal precipitator (14) for dehydrating the muds, characterised in that each centrifugal precipitator (14) is connected to an upstream receiver (12), which has in its lower region a conical part (17) with an inlet (19) arranged in its middle and, suspended centrally from a cover (20), a stand pipe (21) which extends to the lower conical part (17) and forms an annular gap (27) with the wall of the conical part (17), that outlet openings (24) are provided in the upper part of the stand pipe (21) and cover openings (25) in the cover (20) and that the connecting conduit (13) to the centrifugal precipitator (14) is arranged above and adjacent the conical part (17).

2. Apparatus according to claim 1, characterised in that the centrifugal precipitator(s) (14) is/are formed as decanters, pendulum centrifuges, or the like.

**Revendications**

1. Dispositif pour le traitement des boues provenant d'installations de dépoussiérage dans l'industrie de l'acier, avec un séparateur de gros grains (2) pour fractionner les boues, un épaississeur (7) et au moins un séparateur centrifuge (14) pour déshydrater les boues, caractérisé en ce qu'un récipient collecteur (12) est prévu en amont de chaque séparateur centrifuge (14), récipient présentant à sa partie inférieure une partie (17) conique avec une admission (19) disposée au centre, et un tuyau ascendant (21) suspendu au centre d'un couvercle (20), allant jusque dans la partie inférieure conique (17) et formant avec la paroi de la partie conique (17) un espace annulaire (27), en ce qu'il comprend des ouvertures de sortie (24) à la partie supérieure du tuyau ascendant (21), et des ouvertures de couvercle (25) dans le couvercle (20), et en ce que la tubulure de liaison (13) au séparateur centrifuge (14) est disposée au dessus, et dans le voisinage de la partie conique (17).

2. Dispositif selon la revendication 1, caractérisé en ce que le ou les séparateurs centrifuges (14) sont réalisés sous la forme de décanteurs, d'essoreuses oscillantes ou analogues.

Fig. 1

0 152 846

Fig. 2

0 152 846